Europäisches Patentamt

(19) **European Patent Office**

**Office européen des brevets**

(11) Publication number: **0 312 661 B1**

(12) **EUROPEAN PATENT SPECIFICATION**

(45) Date of publication of patent specification: **10.07.91** (51) Int. Cl.⁵: **A01K 1/015**

(21) Application number: **87309325.6**

(22) Date of filing: **21.10.87**

(54) **Particulate sterile material.**

(43) Date of publication of application:
**26.04.89 Bulletin 89/17**

(45) Publication of the grant of the patent:
**10.07.91 Bulletin 91/28**

(84) Designated Contracting States:
**AT CH DE FR GB IT LI NL SE**

(56) References cited:
**GB-A- 2 057 844     GB-A- 2 076 620**
**GB-A- 2 098 448     US-A- 2 708 418**
**US-A- 3 828 731     US-A- 4 625 679**

(73) Proprietor: **Australian Cellulose Industries**
**Pty. Ltd.**
**6 Grimwade Crescent**
**Frankston Victoria 3199(AU)**

(72) Inventor: **Lewellin, Richard Laurance**
**6 Grimswade Crescent**
**Frankston, Victoria 3199(AU)**

(74) Representative: **Howden, Christopher Andrew**
**et al**
**FORRESTER & BOEHMERT Widenmayer-**
**strasse 4/I**
**W-8000 München 22(DE)**

## Description

This invention relates to particulate sterile materials and to methods and apparatus for producing such materials. The invention in a first aspect relates particularly, although not exclusively, to insulation material such as for laying down over the ground or the flooring in animal sheds or the like, the insulation material being intended to be replaced with fresh material at regular intervals. In a second aspect, the invention relates particularly but not exclusively to particulate fertiliser materials.

In intensive chicken breeding and raising, the sheds used usually have an earth, tar or concrete floor and insulation material is laid on the floor to a depth of several centimetres. This is particularly necessary for young chicks so that body heat is not lost to the ground or flooring. Presently this insulation material can be either in the form of wood shavings and chips or shredded paper. In the case of the use of wood shavings or chips, the introduction of such material to the sheds can result in the introduction of bacterial and other infections carried by the insulation material. This can lead to very high mortality rates in the chicks as the infection spreads throughout the chicks. The use of shredded paper such as shredded newsprint can also lead to the introduction of infectious organisms and can also lead to the chicks being choked or strangled since many will burrow in the shredded paper insulation layer.

U.S. Patent No. 2,708,418 in the name of Sugarman describes a bedding material suitable for use in poultry breeding structures. The material is made from waste paper which is pulped with the addition of a disinfectant, germicide, fungicide or other agent. The pulp is formed into sheets which are dried and then chopped into fragments of substantial volume, e.g. in the order of one cubic centimetre. This material would not be a very effective insulator because of the very coarse nature of the fragments so that considerable heat would be lost to the ground or flooring through the relatively large air spaces between the fragments. Also the material would be relatively expensive and/or inconvenient to produce because of the number of steps involved in the production. The used material having animal droppings or excrement mixed with the material would need to be handled with considerable care in order to be useful as fertiliser because of the risk of pathogenic organisms being introduced and carried by the excrement and by the used material.

U.S. Patent No. 3,828,731 in the name of White describes a litter or bedding material for animals comprising cellulose material in sheet form which is treated with microbial inhibitors carried by a solvent. The sheet is chipped or shaved to form pieces having a volume in the order of 1 cubic centimetre. Very fine particles are removed before use. The principal disadvantages of the material described in White are the same as the Sugarman material.

US Patent No. 4,625,679 in the name of Hill describes the manufacture of pellets for use as animal litter. The pellets are made by rupturing or tearing denser pellets to make fluffier pellet having a greater surface area and resulting greater absorbance. However the material could be a source of infectious organisms and, particularly after being used, the product would need to be handled with care to avoid infection.

GB Patent Specification No. 2,057,844 describes the production of animal litter from paper by passing the feed material through a grinding or milling apparatus to produce particles not larger than 30 x 15mm or, in the case of shredded straw, having a length not effectively greater than 30mm. These relatively large particles could carry infectious organisms. The specification refers to the addition of an agent for inhibiting mould growth. This step may be effective, although drying the material subsequent to treatment may be necessary to reduce excessive adhesion of the particles.

GB Specification No. 2,098,448 describes the use of shredded newspaper having areas of between 3 and 16 square cm. Particles of this size can carry large numbers of micro organisms. When the material has been used as a litter for raising poultry, the material mixed with the manure is stated to be a relatively dry, granular, friable material suitable for use as a fertiliser. This material would be expected to carry large numbers of micro organisms, including pathogenic organisms, and therefore need to be handled with extreme care.

It is an object of the present invention to provide a particulate sterile material which is relatively simple to manufacture and which can have very low live organism counts.

It is an object in a first preferred aspect to produce a particulate sterile insulation material suitable for use in animal enclosures and which is relatively simple to produce, is an effective insulator and can have very low organism counts.

It is an object of second preferred aspect of the invention to provide a particulate sterile fertiliser material which is relatively simple to produce and which can have very low live organism counts reducing the need for extreme care in processing, handling and use.

According to the present invention there is provided a method of producing a particulate sterile material, comprising the steps of:
comminuting a cellulose feed material so as to produce a particulate material having a large surface area to volume ratio,

rendering the particulate material in a low density form comprising substantially separate particles of the material in a relatively large volume of air, the method being characterised in that the particulate material substantially consists of individual fibres and small clusters of fibres of cellulose material, and being further characterised by the step of exposing the particulate material in said low density form to a radiation flux from a plurality of directions so that substantially all surfaces of substantially all particles are exposed to the flux and for a period of time sufficient to substantially completely sterilise the particulate material.

Preferably the step of comminuting the feed material comprises pulverising the feed material so as to produce the fine particles, and the step of rendering the particulate material in a low density form comprises entraining in air the fine particles resulting from the pulverising step so as to create an aerated suspension of the fine particles. The method may further include the step of deaerating the suspension of fine particles and then allowing the substantially separate particles to fall under quiescent conditions, the falling separate particles being exposed to the radiation flux.

The radiation flux may comprise ultraviolet radiation of germicidal wavelengths, the intensity of the radiation flux and the step of exposing the material being carried out for an exposure time sufficient to kill substantially all micro-organisms at the surfaces of the fine particles. The time for which the material is exposed to the ultraviolet radiation flux may be in excess of three seconds. The substantially separate fine particles of the material may be allowed to fall freely through the radiation flux whereby substantially the entire surface area of each particle is exposed to the ultraviolet radiation for a period of time sufficient to kill micro-organisms.

Preferably the feed material includes paper so that the step of comminuting the feed material results in the production of cellulose fibres from the paper, the fibres having an average length of less than 5mm.

According to a first particular aspect of the invention there is provided a method of producing a particulate sterile insulation material, comprising the steps of:
comminuting by repeatedly hammering a feed material which includes paper so as to produce fibre matter from the paper, the fibre matter having a large surface area to volume ratio, rendering the fibre matter in a low density substantially separate form comprising substantially separate particles of the material in a relatively large volume of air, the method being characterised in that the particulate material substantially consists of individual fibres and small clusters of fibres of cellulose material and being further characterised by the steps of exposing the fibre matter in said low density form to a radiation flux so that substantially all surfaces of substantially all particles are exposed to the flux and for a period of time sufficient to substantially completely sterilise the fibre matter, and collecting the sterilised fibre matter for laying down over the ground or flooring in animal sheds or in other environments where insulation material may be a source of infectious organisms.

According to a second particular aspect of the invention there is provided a method of producing a particulate sterile fertiliser material, comprising the step of: comminuting a feed material comprising cellulose material and animal droppings so as to produce fibre matter and fine particles of animal droppings matter, the fibre matter and particles having a large surface area to volume ratio, the method being characterised in that the fibre matter is substantially comprising individual fibres and small clusters of fibres of cellulose material, the method being further characterised by the steps of rendering the fibre matter and particles in a low density substantially separate form comprising substantially separate particles of the material in a relatively large volume of air, exposing the fibre matter and particles in said low density form to a radiation flux so that substantially all surfaces of substantially all particles are exposed to the flux and for a period of time sufficient to substantially completely sterilise the fibre matter and particles, and collecting the sterilised fibre matter and particles for use as or in a fertiliser.

In this second aspect the feed material is preferably dried before the step of rendering the fibre matter and particles in a low density form so as to reduce the moisture content of the feed material and eliminate or substantially reduce the tendency of the feed material to agglomerate before the step of exposing the material to the radiation flux. If desired the drying may be carried out before the comminuting step.

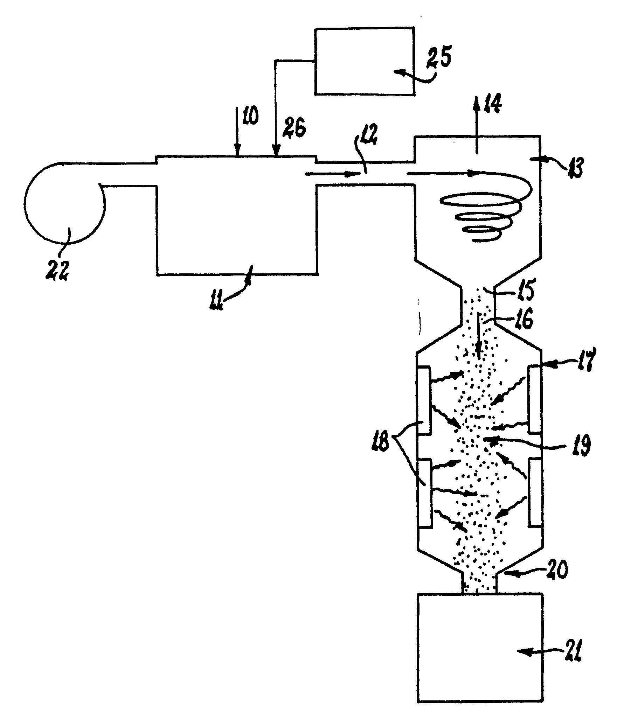

Possible and preferred features of the present invention will now be described with particular reference to the accompanying drawing.

In the drawing there is shown schematically an apparatus for producing particulate sterile material according to an embodiment of the present invention.

It will generally be convenient to describe the apparatus for producing the particulate material according to the invention and from this description the nature of the material itself together with the method of producing the material will be apparent. Also generally the description will refer to insulation production although it is to be understood that fertiliser or materials for other purposes may be produced.

The apparatus illustrated includes a hammer mill 11 to which cellulose containing material is fed at 10.

The cellulose material used in the present invention may be any suitable substance although it is expected that for the envisaged application of animal shed flooring insulation, paper such as newsprint will be suitable material. Other cellulose materials may be included such as rice husks. Paper used may be recycled paper so that initially the paper will be expected to be carrying infectious organisms such as bacteria e.g. as a result of prior human handling. The cellulose material in an alternative use of the invention as fertiliser comprises cellulose material and animal droppings collected from the floors of animal sheds.

The step of comminuting the paper in the hammer mill 11 is effective to produce cellulose fibres preferably of an average length less that 10mm and most preferably of an average length less the 5mm.

The hammer mill 11 which when fed with paper such as newsprint will pulverise the paper to produce fine particles and particularly fibres and fibre clusters. The resulting fine particles are entrained in air so as to create an aerated suspension 12 of fine particles and this suspension can convey the particles away from the mill 11 continuously. For this purpose an air flow can be created by fan 22.

The fine particles are carried as a suspension 12 to cyclone deaerator 13. The majority of the air is withdrawn from the deaerator 13 through the top as shown by reference numeral 14 while the particles and fibres are allowed to fall gently through the bottom outlet 15. These particles fall through the inlet 16 of the sterilising column 17. The column 17 is an upright tube of say one square metre area and about four metres high. In the column 17 there are arranged a plurality of UV sources 18 such as UV fluorescent tubes such that in the region 19 through which the particles and fibres fall there is a sterilising flux of UV radiation of germicidal wavelength(s).

The UV radiation frequency and intensity can be chosen so as to kill organisms at the surfaces of the falling particles. For this effect the sterilising step is carried out after the comminuting step since the comminuting step will produce particles of large relative surface area to volume ratio. The radiation flux preferably has a wavelength and intensity such that for the radiation exposure time and the particle size of the comminuted cellulose material there is substantially complete killing of micro-organisms at the surface of the cellulose material.

The time for which the cellulose material is exposed to the radiation flux in column 17 is preferably in excess of three seconds and is preferably in the range of four to six seconds. The particles pass through the bottom outlet 20 to zone 21 where collection and packaging for example takes place.

The output of the apparatus collected at 21 will be a sterile dry particulate cellulose material. If desired a powder or particulate sterilising agent can be added to the cellulose material at this stage, for example for the purpose of actively sterilising animal droppings that in use will accumulate on or in the material when used as animal shed floor insulation.

Also a fire retardant, such as the water soluble compound sold under the registered trade mark FLOVAN can be added to the material for insulation uses. The feed material can be sprayed or soaked with a solution or a suspension of fire retardant and then dried prior to pulverising.

The cellulose material can be bagged for transport and use. Alternatively the particulate cellulose material can be compressed, e.g. hydraulically, into bricks or the like for ease of handling and transport. The bricks may be coated with a plastics material to maintain the material sterile by providing a barrier to airborne organisms or organisms introduced in other ways. The bricks can be returned to fine particulate form at the site of use, e.g. by feeding the bricks to rotating studded cylinders arranged to break up the bricks into fine particulate form.

In the case of use of the insulation material in animal shed flooring, the particulate material can be blown into the shed and allowed to settle to form a uniform depth layer on the floor. If desired the material can be gently rolled to compress the material and reduce the incidence or airborne material. The rolling of the material however is not believed to be essential since it has been found that pulverised paper does not congest the lungs of young chicks.

After the material has been in use for some weeks as floor insulation the material should be replaced with fresh insulation material. The insulation material and animal droppings can be removed by a vacuuming process. Again the used material can be hydraulically pressed into bricks for ease of transport and handling. The used material can be used as or provide the basis for manufacture of a fertiliser since the animal droppings and cellulose material will both provide nutrients for plant growth. In particular, the mixed cellulose material and animal droppings can be dried as illustrated in drier 25 and then fed at 26 to the hammer mill 11 for comminution and later sterilisation according to the invention.

Example

In one example of a method of producing insulation material according to the present invention, paper was pulverised to form individual cellulose fibres and clusters of fibres of an average length less that 5mm. These fibres had an average plate count at 30°c of 170 organisms per gram. This count represented a wide variety of different bacterial types. After exposure of this sample to ultraviolet radiation by passing the material through a column, the plate count, after 48 hours incubation at 30°C was two organisms per gram of material. This shows that the method and apparatus is capable of producing substantially sterile fine particulate insulation suitable for use in animal shed floors.

## Claims

1. A method of producing a particulate sterile material, comprising the steps of:
   comminuting a cellulose feed material (10) so as to produce a particulate material having a large surface area to volume ratio,
   rendering the particulate material in a low density form comprising substantially separate particles of the material in a relatively large volume of air,
   the method being characterised in that the particulate material substantially consists of individual fibres and small clusters of fibres of cellulose material, and being further characterised by the step of exposing the particulate material in said low density form to a radiation flux from a plurality of directions so that substantially all surfaces of substantially all particles are exposed to the flux and for a period of time sufficient to substantially completely sterilise the particulate material.

2. A method as claimed in Claim 1 characterised in that the step of comminuting the feed material comprises pulverising the feed material so as to produce the particulate material, said step of rendering the particulate material in a low density form comprising entraining in air the particulate material resulting from the pulverising step so as to create an aerated suspension of the particulate material (12).

3. A method as claimed in Claim 2 characterised by the further step of deaerating the suspension of particulate material (12) and then allowing the substantially separate particles to fall under quiescent conditions, the falling separate particles being exposed to the radiation flux.

4. A method as claimed in Claim 1 characterised in that the radiation flux comprises ultraviolet radiation of germicidal wavelengths, the intensity of the radiation flux and the step of exposing the material being carried out for an exposure time sufficient to kill substantially all micro-organisms at the surfaces of the particulate material.

5. A method as claimed in Claim 4 characterised in that the time for which the material is exposed to the ultraviolet radiation flux is in excess of three seconds.

6. A method as claimed in Claim 1 characterised in that the feed material (10) includes paper, the step of comminuting the feed material (10) resulting in the production of cellulose fibres from the paper, the fibres having an average length of less than 5mm.

7. A method of producing a particulate sterile insulation material, comprising the steps of:
   comminuting by repeatedly hammering a feed material (10) which includes paper so as to produce fibre matter from the paper, the fibre matter having a large surface area to volume ratio, rendering the fibre matter in a low density substantially separate form comprising substantially separate particles of the material in a relatively large volume of air, the method being characterised in that the particulate material substantially consists of individual fibres and small clusters of fibres of cellulose material and being further characterised by the steps of exposing the fibre matter in said low density form to a radiation flux so that substantially all surfaces of substantially all particles are exposed to the flux and for a period of time sufficient to substantially completely sterilise the fibre matter, and collecting the sterilised fibre matter for laying down over the ground or flooring in animal sheds or in other environments where insulation material may be a source of infectious organisms.

8. A method of producing a particulate sterile fertiliser material, comprising the step of:
   comminuting a feed material (10) comprising cellulose material and animal droppings so as to produce fibre matter and fine particles of animal droppings matter, the fibre matter and particles having a large surface area to volume ratio,
   the method being characterised in that the fibre matter substantially comprises individual fibres and small clusters of fibres of cellulose material, the method being further characterised by the steps of rendering the fibre matter and particles in a low density substantially separate form comprising substantially separate particles of the material in a relatively large volume of air,

exposing the fibre matter and particles in said low density form to a radiation flux so that substantially all surfaces of substantially all particles are exposed to the flux and for a period of time sufficient to substantially completely sterilise the fibre matter and particles,

and collecting the sterilised fibre matter and particles for use as or in a fertiliser.

9. A method as claimed in Claim 8 characterised in that the feed material (10) is dried before the step of rendering the fibre matter and particles in a low density form so as to reduce the moisture content of the feed material (10) and eliminate or substantially reduce the tendency of the feed material (10) to agglomerate before the step of exposing the fibre matter and particles to the radiation flux.

**Revendications**

1. Procédé pour la fabrication de matériau particulaire stérile comprenant les étapes suivantes:
   - on réduit en petits morceaux une charge (10) de matériau cellulosique de façon à produire un matériau particulaire dont le rapport de la surface au volume est élevé;
   - on confère au matériau particulaire une forme ayant une faible densité qui, dans un volume d'air relativement important, comporte des particules de matériau qui sont sensiblement séparées l'une de l'autre;

   le procédé étant caractérisé en ce que le matériau particulaire se compose en majeure partie de fibres individuelles et de petits conglomérats de fibres de matériau cellulosique et étant caractérisé de plus par l'étape qui consiste à exposer le matériau particulaire sous ladite forme de faible densité, à un flux de radiations provenant d'une pluralité de directions de façon que pratiquement toute la surface de sensiblement toutes les particules soit exposée au flux et ce, pendant une période de temps suffisante, pour que le matériau particulaire soit sensiblement complètement stérilisé.

2. Un procédé selon la revendication 1, caractérisé en ce que l'étape au cours de laquelle on réduit en petits morceaux la charge de matériau, consiste à pulvériser cette dernière de manière à produire un matériau particulaire, l'étape au cours de laquelle on confère au matériau particulaire une forme ayant une faible densité consistant à entraîner dans de l'air le matériau particulaire qui résulte de l'étape de pulvérisation, de façon à créer une suspension de matériau particulaire (12) et d'air.

3. Un procédé selon la revendication 2, caractérisé par une étape ultérieure consistant à désaérer la suspension de matériau particulaire (12) puis à laisser les particules sensiblement séparées descendre sans action extérieure les particules séparées, au cours de leur chute, étant exposées à un flux de radiation.

4. Un procédé selon la revendication 1, caractérisé en ce que le flux de radiation comporte une radiation ultraviolette dont les longueurs d'ondes sont germicides, l'intensité du flux de la radiation et l'étape au cours de laquelle on soumet le matériau à l'exposition du flux étant réalisés de osrte à assurer un temps d'exposition suffisant pour tuer sensiblement tous les micro-organismes situés à la surface du matériau particulaire.

5. Un procédé selon la revendication 4, caractérisé en ce que le temps d'exposition du matériau au flux de radiation ultraviolette est supérieur à 3 secondes.

6. Un procédé selon la revendication 1, caractérisé en ce que la charge de matériau (10) comporte du papier, l'étape au cours de laquelle on réduit en petits morceaux la charge (10) ayant pour effet de produire des fibres cellulosiques à partir du papier, lesdites fibres ayant une longueur moyenne inférieure à 5 mm.

7. Un procédé pour produire un matériau d'isolation particulaire stérile comportant les étapes suivantes:
   - fragmentation poussée par martèlement répétitif de la charge (10) de matériau qui comporte du papier, de façon à réaliser une matière fibreuse à partir du papier, la matière fibreuse ayant un rapport de la surface au volume élevé,
   - passage de la matière fibreuse sous une forme de faible densité sensiblement divisée comprenant des particules de matériau sensiblement séparées dans un volume relativement important d'air,

   le procédé étant caractérisé en ce que le matériau particulaire est sensiblement composé de fibres individuelles et de petits conglomérats de fibres de matériau cellulosique et, de plus, étant caractérisé par des étapes consistant à exposer la matière fibreuse sous ladite forme de faible densité, à un flux de radiation de façon que, sensiblement toutes les surfaces de sensiblement toutes les particules soient soumises à l'exposition du flux et ce, pendant un temps suffisant pour que pratiquement la stérilisation complète de la matière fibreuse soit atteinte, et à rassembler la matière fibreuse stérilisée pour l'étaler sur le sol ou pour servir de litière dans des hangars à animaux ou d'autres endroits où le matériau isolant peut être source d'organismes producteurs d'infection.

8. Un procédé de fabrication d'un matériau fertilisant particulaire stérile comprenant les étapes au cours desquelles:
   - on fragmente en petits morceaux une charge de matériau (10) comportant un matériau cellulosique et des défécations d'animaux de façon à obtenir de la matière fibreuse et des fines particules de matière fécale d'origine animale, la matière fibreuse et les particules ayant une valeur du rapport entre la surface et le volume élevé,
   le procédé étant caractérisé en ce que la matière fibreuse comporte sensiblement des fibres individuelles et de petits conglomérats de fibres de matériau cellulosique, le procédé étant de plus caractérisé par les étapes qui consistent à:
   - conférer à la matière fibreuse et aux particules une forme sensiblement divisée de faible densité, comprenant les particules de matériau sensiblement divisées dans un volume d'air relativement important,
   - exposer la matière fibreuse et les particules ayant ladite forme de faible densité à un flux de radiation de manière que sensiblement toute la surface de sensiblement toutes les particules soit soumise à l'exposition du flux et ce, pendant une période de temps suffisante pour pratiquement stériliser complètement la matière fibreuse et les particules, et
   - rassembler la matière fibreuse stérilisée et les particules pour les utiliser telles quelles comme fertilisant ou les faire entrer dans un mélange fertilisant.

9. Un procédé selon la revendication 8, caractérisé en ce que la charge de matériau est séchée avant de procéder à l'étape où l'on confère à la matière fibreuse et aux particules une forme de densité faible de manière telle que la teneur en humidité de la charge (10) soit réduite et que l'on élimine ou réduise, de façon sensible, la tendance qu'a la charge (10) d'entrée à se rassembler en conglomérats, avant l'étape où la matière fibreuse et les particules sont soumises à l'exposition au flux de radiations.

**Ansprüche**

1. Verfahren zur Herstellung eines aus Partikeln bestehenden sterilen Materials, mit folgenden Schritten:

   Zerkleinern eines Beschickungsmaterials (10) aus Zellulose, um ein aus Partikeln bestehendes Material mit einem großen Verhältnis von Oberfläche zu Volumen herzustellen,

   Überführen des aus Partikeln bestehenden Materials in eine Form niedriger Dichte, die im wesentlichen getrennte Partikel des Materials in einem relativ großen Luftvolumen umfaßt,

   wobei das Verfahren dadurch gekennzeichnet ist, daß das aus Partikeln bestehende Material im wesentlichen aus einzelnen Fasern und kleinen Faserbüscheln aus Zellulosematerial besteht, und weiter durch den Schritt gekennzeichnet ist, das aus Partikeln bestehende Material in besagter Form niedriger Dichte einem Strahlungsfluß aus mehreren Richtungen auszusetzen, so daß im wesentlichen alle Oberflächen im wesentlichen aller Partikel dem Fluß ausgesetzt werden und zwar für einen Zeitraum, der ausreicht, um das aus Partikeln bestehende Material im wesentlichen vollständig zu sterilisieren.

2. Verfahren nach Anspruch 1, dadurch gekennzeichnet, daß der Schritt des Zerkleinerns des Beschickungsmaterials das Pulverisieren des Beschickungsmaterials umfaßt, um das aus Partikeln bestehende Material herzustellen, wobei besagter Schritt des Überführens des aus Partikeln bestehenden Materials in eine Form niedriger Dichte das Mitreißen des aus Partikeln bestehenden Materials, das aus dem Pulverisierungsschritt stammt, in Luft umfaßt, um eine Luftsuspension (12) des aus Partikeln bestehenden Materials zu erzeugen.

3. Verfahren nach Anspruch 2, weiter gekennzeichnet durch den Schritt des Entlüftens der Suspension (12) des aus Partikeln bestehende Materials und des anschließenden Fallenlassens der im wesentlichen getrennten Partikel unter Ruhebedingungen, wobei die fallenden getrennten Partikel dem Strahlungsfluß ausgesetzt werden.

4. Verfahren nach Anspruch 1, dadurch gekennzeichnet, daß der Strahlungsfluß ultraviolette Strahlung keimtötender Wellenlängen umfaßt, wobei die Intensität des Strahlungsflusses und der Schritt des Bestrahlens des Materials, der für eine bestimmte Bestrahlungszeit durchgeführt wird, ausreichen, um im wesentlichen alle Mikroorganismen an den Oberflächen des aus Partikeln bestehenden Materials abzutöten.

5. Verfahren nach Anspruch 4, dadurch gekennzeichnet, daß die Zeit, für die das Material dem ultravioletten Strahlungsfluß ausgesetzt wird, drei Sekunden übersteigt.

6. Verfahren nach Anspruch 1, dadurch gekennzeichnet, daß das Beschickungsmaterial (10) Papier einschließt, wobei der Schritt des Zerkleinerns des Beschickungsmaterials (10) zur Herstellung von Zellulosefasern aus dem Papier führt, wobei die Fasern eine mittlere Länge von weniger als 5 mm besitzen.

7. Verfahren zur Herstellung eines aus Partikeln bestehenden sterilen Isolierungsmaterials, mit folgenden Schritten:

Durch wiederholtes Hämmern Zerkleinern eines Beschickungsmaterials (10), das Papier einschließt, um Fasermaterial aus dem Papier herzustellen, wobei das Fasermaterial ein großes Verhältnis von Oberfläche zu Volumen besitzt,

Überführen des Fasermaterials in eine getrennte Form niedriger Dichte, die im wesentlichen getrennte Partikel des Materials in einem relativ großen Luftvolumen umfaßt,

wobei das Verfahren dadurch gekennzeichnet ist, daß das aus Partikeln bestehende Material im wesentlichen aus einzelnen Fasern und kleinen Faserbüscheln aus Zellulosematerial besteht, und weiter durch die Schritte gekennzeichnet ist, das Fasermaterial in besagter Form niedriger Dichte einem Strahlungsfluß auszusetzen, so daß im wesentlichen alle Oberflächen vom im wesentlichen allen Partikeln dem Fluß ausgesetzt werden und zwar für einen Zeitraum, der ausreicht, um das Fasermaterial im wesentlichen vollständig zu sterilisieren, und das sterilisierte Fasermaterial zu sammeln, um es über den Grund oder den Boden in Tierställen oder anderen Umgebungen zu legen, wo Isolierungsmaterial eine Quelle infektiöser Organismen sein kann.

8. Verfahren zur Herstellung eines aus Partikeln bestehenden sterilen Düngermaterials, mit folgendem Schritt:

Zerkleinern eines Beschickungsmaterials (10), das Zellulosematerial und Tierkot umfaßt, um Fasermaterial und feine Partikel aus Tierkotmaterial herzustellen, wobei das Fasermaterial und die Partikel ein großes Verhältnis von Oberfläche zu Volumen besitzen, wobei das Verfahren dadurch gekennzeichnet ist, daß das Fasermaterial im wesentlichen einzelne Fasern und kleine Faserbüschel aus Zellulosematerial umfaßt, und das Verfahren weiter durch die Schritte gekennzeichnet ist, das Fasermaterial und die Teilchen in eine im wesentlichen getrennte Form niedriger Dichte zu überführen, die im wesentlichen getrennte Partikel des Materials in einem relativ großen Luftvolumen umfaßt,

das Fasermaterial und die Partikel in besagter Form niedriger Dichte einem Strahlungsfluß auszusetzen, so daß im wesentlichen alle Oberflächen von im wesentlichen allen Partikeln dem Fluß ausgesetzt werden und zwar für einen Zeitraum, der ausreicht, um das Fasermaterial und die Partikel im wesentlichen vollständig zu sterilisieren,

und das sterilisierte Fasermaterial und die sterilisierten Partikel zur Verwendung als oder in einem Dünger zu sammeln.

9. Verfahren nach Anspruch 8, dadurch gekennzeichnet, daß das Fasermaterial (10) vor dem Schritt des Überführens des Fasermaterials und der Partikel in eine Form niedriger Dichte getrocknet wird, um den Feuchtigkeitsgehalt des Beschickungsmaterials (10) zu verringern und die Neigung des Fasermaterials (10) zu agglomerieren vor dem Schritt, bei dem das Fasermaterial und die Partikel dem Strahlungsfluß ausgesetzt werden, zu beseitigen oder wesentlich zu verringern.